Europäisches Patentamt

European Patent Office

Office européen des brevets

(19)

(11) EP 0 558 910 B1

(12) **EUROPÄISCHE PATENTSCHRIFT**

(45) Veröffentlichungstag und Bekanntmachung des Hinweises auf die Patenterteilung:
19.05.1999 Patentblatt 1999/20

(51) Int Cl.$^6$: **H04B 1/16**

(21) Anmeldenummer: 93101057.3

(22) Anmeldetag: 25.01.1993

(54) **Verfahren zur Beseitigung von Störungen bei Stereo-Rundfunk-Signalen**

Method for noise elimination in stereo broadcast signals

Méthode d'élimination de bruits pour signaux stéréophoniques radiodiffusés

(84) Benannte Vertragsstaaten:
**AT DE ES FR IT PT**

(30) Priorität: **02.03.1992 DE 4206476**

(43) Veröffentlichungstag der Anmeldung:
**08.09.1993 Patentblatt 1993/36**

(73) Patentinhaber: **Blaupunkt-Werke GmbH**
**31132 Hildesheim (DE)**

(72) Erfinder: **Kässer, Jürgen, Dr.**
**W-3201 Diekholzen (DE)**

(56) Entgegenhaltungen:
**EP-A- 0 255 553          EP-A- 0 375 971**

- **WIRELESS WORLD Bd. 87, Nr. 1549, Oktober 1981, COLCHESTER,GB Seiten 79 - 83 ILLINGSWORTH 'A.m. receivers without interference'**

**Beschreibung**

Die Erfindung geht aus von einem Verfahren nach der Gattung des Hauptanspruchs.

Beim Empfang von Signalen, welche über mehrere Wege von einem Sender zu einem Empfänger gelangen, wobei die Laufzeiten der Signale verschieden groß und insbesondere nicht konstant sind, treten in an sich bekannter Weise Störungen auf. Insbesondere bei mobilen Empfängern, wie beispielsweise Autoradios, können diese Störungen erheblich sein - auch wenn die sonstigen Empfangsbedingungen, wie beispielsweise die Feldstärke am Empfangsort, einen einwandfreien Empfang zulassen würden.

Durch den Mehrwegeempfang von Signalen, die mit einer im wesentlichen konstanten Amplitude ausgestrahlt werden, insbesondere frequenzmodulierten Signalen, wird außer der Phase bzw. der Frequenz auch die Amplitude der empfangenen Signale beeinflußt. Dieses wird bei bekannten Verfahren und Schaltungsanordnungen, beispielsweise bei einer Schaltungsanordnung nach DE 38 43 018 derart ausgenutzt, daß das gestörte Signal über ein Filter geleitet wird, dessen Koeffizienten derart gesteuert werden, daß sich am Filterausgang ein Signal konstanter Amplitude einstellt. Dieses Filter weist dann eine zur Übertragungsfunktion des Übertragungskanals näherungsweise inverse Funktion auf und korrigiert somit auch die durch den Mehrwegeempfang verursachten Frequenz- bzw. Phasenstörungen.

Bei der Minimierung der durch den Mehrwegeempfang bedingten Amplitudenmodulation kann es jedoch vorkommen, daß nicht das tatsächliche Optimum, sondern ein Nebenoptimum gefunden wird. Aufgabe der vorliegenden Erfindung ist es, beim Empfang von Stereo-Rundfunk-Signalen diese Fehladaption des Filters zu vermeiden.

Das erfindungsgemäße Verfahren mit den kennzeichnenden Merkmalen des Hauptanspruchs hat den Vorteil, daß die Adaption des Filters zuverlässig zu denjenigen Filterkoeffizienten führt, bei welchen das Filter eine annähernd inverse Funktion zur Übertragungsfunktion aufweist.

Durch die in den Unteransprüchen aufgeführten Maßnahmen sind vorteilhafte Weiterbildungen und Verbesserungen der im Hauptanspruch angegebenen Erfindung möglich.

Ein Ausführungsbeispiel der Erfindung ist in der Zeichnung anhand mehrerer Figuren dargestellt und in der nachfolgenden Beschreibung näher erläutert. Es zeigt:

Fig. 1    eine schematische Darstellung zur Erläuterung des Mehrwegeempfangs,

Fig. 2    ein Blockschaltbild eines Ausführungsbeispiels und

Fig. 3    ebenfalls als Blockschaltbild eine detailliertere Darstellung von Teilen des Ausführungsbeispiels gemäß Fig. 2.

Gleiche Teile sind in den Figuren mit gleichen Bezugszeichen versehen.

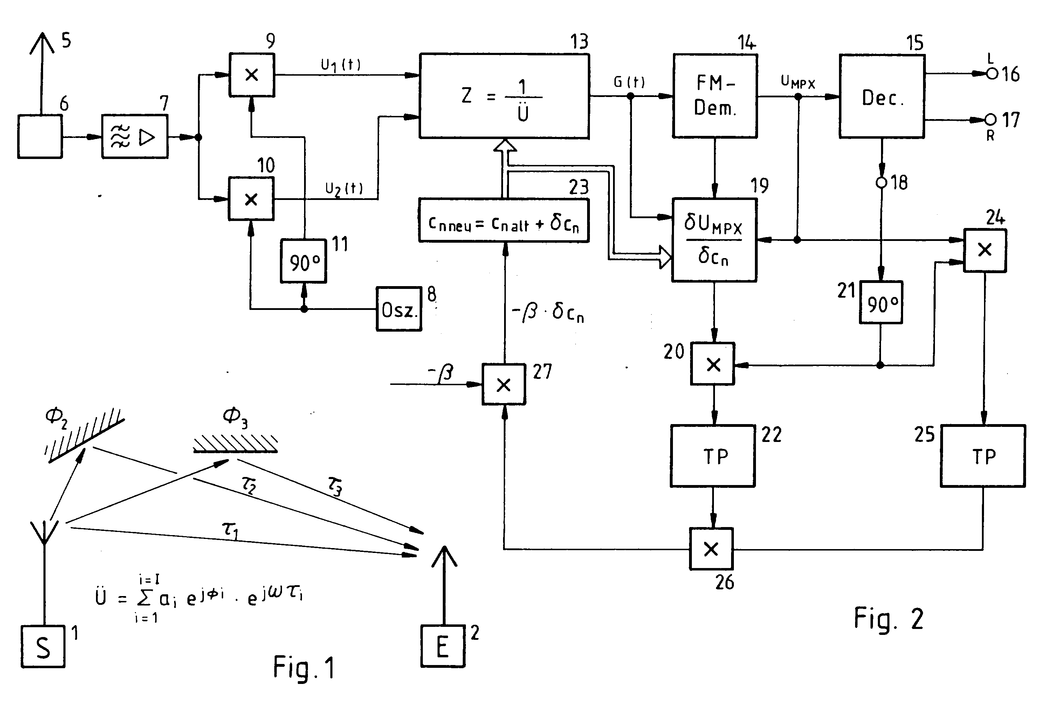

Fig. 1 stellt verschiedene Wege zwischen einem Sender 1 und einem Empfänger 2 dar. Dabei wird die von der Antenne des Senders 1 abgestrahlte Nachricht einerseits direkt und andererseits über zwei weitere Wege nach jeweils einer Reflektion übertragen. Die Reflektionen können beispielsweise durch Bauten oder Berghänge verursacht sein. Die Übertragungsfunktion Ü ergibt sich aus der Summe der Übertragungsfunktionen aller Wege, wobei $a_i$ der Amplitudenübertragungsfaktor, phi die Phasendrehung der jeweiligen Welle durch die Reflektion, tau die Laufzeit der jeweiligen Welle (bezogen auf eine mittlere Laufzeit), i die Ordnungsnummer des jeweiligen Weges, I die Anzahl der Wege und omega die Frequenz ist.

Bei Frequenzmodulation ist zwar die Amplitude der abgestrahlten Wellen konstant, die Amplitude der empfangenen Signale wird jedoch beim Mehrwegeempfang infolge der modulierten Frequenz veränderlich, da sich die Wellen mit verschieden langen Laufzeiten bei verschiedenen Frequenzen mit entsprechend unterschiedlichen Phasenlagen überlagern. Darüberhinaus ändern sich bei mobilen Empfängern wie beispielsweise Autoradios die Anteile von Ü mit der Zeit, was bei der Auslegung des erfindungsgemäßen Verfahrens durch eine entsprechend schnelle Regelung zu berücksichtigen ist.

Fig. 2 stellt ein Blockschaltbild mit Teilen einer Empfangseinrichtung dar, welche das erfindungsgemäße Verfahren umfaßt. Von einer Antenne 5 werden die empfangenen Signale einer Empfängerschaltung 6 zugeführt, in der in an sich bekannter Weise ein Oszillator, eine Mischstufe und Vorstufen vorgesehen sind. In ebenfalls bekannter Weise wird das Ausgangssignal der Schaltung 6 einem Zwischenfrequenzverstärker 7 zugeführt, der ein geregelter Verstärker ist, jedoch keinen Begrenzer umfaßt. Das Ausgangssignal des Zwischenfrequenzverstärkers 7 wird in das Basisband umgesetzt, wozu es mit der Ausgangsspannung eines Oszillators 8 mit Hilfe von zwei Mischschaltungen 9, 10 gemischt wird. Dabei wird der Mischschaltung 9 die Ausgangsspannung des Oszillators 8 nach einer Phasendrehung um 90° (Schaltung 11) zugeführt, so daß die Ausgangssignale der Mischschaltungen 9, 10 orthogonal sind. Die Ausgangsspannungen der Mischschaltung 10 und der Mischschaltung 9 stellen den Real- und Imaginärteil des mit den Mehrwegeempfangsstörungen behaftete Signal U(t) dar. Es wird über ein Filter 13 geleitet, welches einen zur Übertragungsfunktion Ü näherungsweise inversen Frequenzgang Z aufweist.

Das Filter 13 kann ein nichtrekursives oder ein rekursives Filter sein. Da für den vorgesehenen Zweck ein nichtrekursives Filter eine hohe Anzahl von Koeffizienten - beispielsweise 256 - aufweist, können auch im Rahmen der vorliegenden Erfindung in Anlehnung an DE 38 43 018 zunächst Koeffizienten eines rekursiven Filters berechnet und daraus die Koeffizienten des nichtrekursiven Filters ermittelt werden. Bei der vorliegenden Erfindung werden die Koeffizienten jedoch derart bestimmt, daß eine Zielfunktion minimiert wird, die durch Multiplikation des demodulierten Signals mit einem durch Frequenzverdoppelung und Quadratur des Stereopilotsignals gewonnenen weiteren Signal und anschließende Tiefpaßfilterung berechnet wird.

An das Filter 13 schließt sich in an sich bekannter Weise ein FM-Demodulator an, dessen Ausgangssignal $U_{MPX}$ einem Stereo-Decoder 15 zugeleitet wird. Die Ausgänge 16 und 17 des Stereo-Decoders 15 führen das linke und das rechte Audiosignal. An einem weiteren Ausgang 18 des Stereo-Decoders liegt der Stereo-Träger an, der eine Frequenz von 38 kHz aufweist, was dem Doppelten der Frequenz des Stereopilotsignals entspricht.

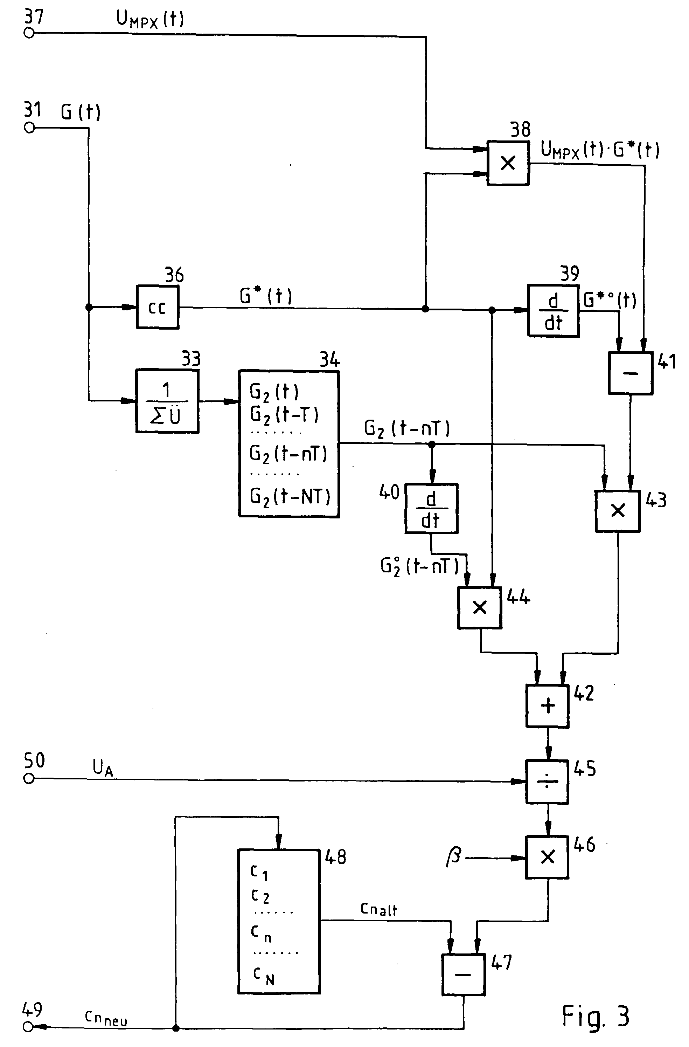

Aus dem korrigierten FM-Signal G(t), dem Multiplexsignal $U_{MPX}$ und der Einhüllenden des FM-Signals $U_a$ wird bei 19 ein Gradient $\delta U_{MPX}/\delta c_n$ gebildet. Dabei bedeutet $c_n$ den jeweiligen Filterkoeffizienten mit $n = 1$ bis N. Einzelheiten der Schaltung 19 werden später im Zusammenhang mit Fig. 3 -näher erläutert.

Das Ausgangssignal der Schaltung 19 wird bei 20 mit dem Stereo-Träger multipliziert, der bei 21 um 90° in der Phase gedreht wurde. Das Produkt wird über einen Tiefpaß 22 und zwei Multiplizierer 26, 27 geleitet und als $-\beta \cdot \delta c_n$ einer Schaltung 23 zugeführt, welche aus dem jeweils vorangegangenen Koeffizienten $c_{n\ alt}$ einen neuen Koeffizienten $c_{n\ neu}$ ableitet. Dabei wird berücksichtigt, daß jeweils ein Teil des Filters für das Signal $U_1(t)$ mit dem Koeffizienten $c_n$ und ein anderer Teil für das Signal $U_2(t)$ mit den Koeffizienten $c*_n$ vorgesehen ist. Außerdem wird der um 90° gedrehte Stereoträger mit dem Multiplexsignal bei 24 multipliziert und das Ergebnis über einen Tiefpaß 25 zum Multiplizierer 26 geleitet.

Für das Ausgangssignal G(t) des Filters 13 gilt:

$$G(t) = \frac{U(t)}{\Sigma c_n z^n}$$

Die Zielfunktion bei dem erfindungsgemäßen Verfahren basiert auf dem demodulierten Signal. Für dieses gilt:

$$U_{MPX} = \frac{G(t) \cdot G*^o(t) - G^o(t) \cdot G*(t)}{G(t) \cdot G*(t)}$$

Dabei bedeuten $G^o(t)$ die zeitliche Ableitung und $G*(t)$ die komplex Konjugierte von G(t). Das Multiplexsignal $U_{MPX}$ wird mit einem aus dem Stereopilotsignal durch Frequenzverdoppelung gebildeten 38-kHz-Signal in Quadratur stehenden Signal gemischt. Das so gewonnene Signal wird mit einem Tiefpaß, dessen Grenzfrequenz kleiner oder gleich 15 kHz ist, gefiltert. Damit ergibt sich ein Fehlersignal von:

$$U_{Fehler} = TP[U_{MPX} \cdot \sin(2\pi \cdot 38kHz \cdot t)]$$

Dieses Signal verschwindet im ungestörten Fall. Daher ist Zielfunktion:

$$U_{Ziel} = (U_{Fehler})^2 = Min\ (c)$$

$$\frac{\delta U_{Ziel}}{\delta c_n} = 0 = U_{Fehler} \cdot \frac{\delta U_{Fehler}}{\delta c_n} \qquad [2]$$

$$\frac{\delta U_{Fehler}(t)}{\delta c_n} = TP[\frac{\delta U_{MPX}(t)}{\delta c_n} \cdot \sin(2\pi \cdot 38kHz \cdot t)]$$

$$\frac{\delta U_{MPX}(t)}{\delta c_n} = \frac{(\delta G/\delta c_n)G*^o - G*(\delta G^o/\delta c_n)}{GG*}$$

$$- \frac{G(t) \cdot G^{*^o}(t) - G^o(t) \cdot G^*(t)}{(G(t) \cdot G^*(t))^2} \cdot \frac{\delta G(t)}{\delta c_n} \cdot G^*(t)$$

Nun gilt:

$$\frac{\delta G(t)}{\delta c_n} = \frac{\delta}{\delta c_n} \frac{U(t)}{\Sigma c_n z^n} = - \frac{z^n U(t)}{(\Sigma c_n z^n)^2} = - \frac{G(t-nT)}{\Sigma c_n z^n} \overset{!}{=} - G_2(t-nT)$$

Ferner ist $G(t) \cdot G^*(t) = U_A$ die resultierende Einhüllende des Signals.

Damit ergibt sich:

$$\frac{\delta U_{MPX}(t)}{\delta c_n} = - \frac{G_2(t-nT) \cdot G^{*^o}(t) - G^*(t) \cdot G_2^{o}(t-n \cdot T)}{U_A}$$

$$+ U_{MPX}(t) \cdot \frac{G_2(t-nT) \cdot G^*(t)}{U_A}$$

$$= \{G_2(t-nT)[U_{MPX}(t) \cdot G^*(t) - G^{*^o}(t)] + G^*(t) \cdot G_2^{o}(t-nT)\}/U_A \qquad [1]$$

Man erhält damit für die Koeffizienten des Filters die Approximationsgleichung

$$c_{n\,neu} = c_{n\,alt} - \beta \frac{\delta U_{Ziel}}{\delta c_n}$$

Eine entsprechende Gleichung gilt für die Koeffizienten $c^*_n$.

Da das Stereopilotsignal im gestörten Fall ebenfalls nicht exakt in seiner Phasenlage bestimmbar ist, muß diese Phasenlage mit jedem Approximationsschritt neu bestimmt werden. Da ferner die Phasenlage über lange Zeit konstant bleibt, ist es sinnvoll, die exakte Phasenlage aus der Vergangenheit fortzuschreiben und sie nur sehr langsam nachzuführen.

Die somit beschriebene Ableitung der Koeffizienten ist in Fig. 3 als Schaltung dargestellt. Ihr wird über einen Eingang 31 das korrigierte Signal G(t) zugeführt. Von diesem Signal werden in einem Zwischenspeicher die letzten N Abtastwerte abgelegt. Außerdem wird bei 33 das Signal G(t) durch ΣÜ geteilt, das heißt, es wird nochmals mit einem Filter gefiltert, wie es bereits im Signalzweig vor G(t) liegt. Von dem somit entstehenden Signal $G_2(t)$ werden in einem weiteren Speicher 34 ebenfalls die letzten N Abtastwerte abgelegt. Außerdem steht jeweils der aktuelle Abtastwert der Signale G(t) und $G_2(t)$ zur Verfügung. Weiterhin werden nacheinander die zurückliegenden Abtastwerte komplex konjugiert, so daß die Werte G∗(t-n·T) entstehen. Der derzeitige Wert von G(t) wird bei 36 komplex konjugiert.

Einem Eingang 37 wird das Multiplexsignal zugeführt, das bei 38 mit den komplex konjugierten Abtastwerten von G(t) multipliziert wird. Die zeitliche Ableitung $G∗^o(t)$ des Signals G∗(t) wird bei 39 gebildet. Außerdem wird die zeitliche Ableitung $G_2^o(t-n·T)$ bei 40 gebildet. Zur weiteren Verarbeitung dienen Subtrahierschaltungen 41, 42 und Multiplizierer 43, 44. Das Ausgangssignal des Subtrahieres 42 wird bei 45 durch die Hüllkurve $U_A$ dividiert, die bei 50 zugeführt wird. Daran schließt sich eine Multiplikation 46 mit einer Konstanten β an. Mit den somit erhaltenen Werten $\delta c_n$ werden die im Speicher 48 abgelegten Werte $c_{n\,alt}$ in dem Subtrahierer 47 zu den Koeffizienten $c_{n\,neu}$ geändert und wieder im Speicher 48 abgelegt.

Bei der Realisierung des erfindungsgemäßen Verfahrens können die Möglichkeiten der modernen Halbleitertechnik angewendet und beispielsweise einzelne Funktionsblöcke der Schaltung nach Fig. 3 von einem entsprechend programmierten Signalprozessor ersetzt werden.

**Patentansprüche**

1.   Verfahren zur Beseitigung von Störungen, insbesondere verursacht durch Mehrwegempfang, bei einem FM-Rundfunksignal, wobei das empfangene Rundfunksignal ein Filter (13) mit steuerbaren Koeffizienten ($C_1$-$C_N$) durchläuft,

wobei zur Berechnung der Koeffizienten ($C_1$-$C_N$) eine Zielfunktion ($U_{Ziel}$) minimiert wird, dadurch gekennzeichnet, daß die Zielfunktion ($U_{Ziel}$) auf maximale Übereinstimmung der beiden Seitenbänder eines in einem Stereo-Multiplexsignal ($U_{MPX}$) enthaltenen das Stereo-Differenzsignal tragenden Hilfsträgers abzielt.

2. Verfahren nach Anspruch 1, dadurch gekennzeichnet, daß die Zielfunktion ($U_{Ziel}$) aus dem demodulierten FM-Rundfunksignal abgeleitet wird.

3. Verfahren nach Anspruch 2, dadurch gekennzeichnet, daß die Zielfunktion ($U_{Ziel}$) durch Multiplikation (24) des demodulierten FM-Rundfunksignals ($U_{MPX}$) mit einem durch Frequenzverdopplung und Quadratur (21) aus einem Pilottonsignal gewonnenen weiteren Signal und anschließende Tiefpaßfilterung (25) berechnet wird.

4. Verfahren nach einem der Ansprüche 1 bis 3, dadurch gekennzeichnet, daß beim Empfang eines Stereo-Rundfunk-Signals mit einem Pilotsignal Amplitude und Phase des Pilotsignals ebenfalls adaptiert werden.

5. Verfahren nach Anspruch 4, dadurch gekennzeichnet, daß die Adaption nach Phase und Amplitude mit geringerer Schrittweite ($\beta$) erfolgt.

6. Verfahren nach einem der Ansprüche 1 bis 5, dadurch gekennzeichnet, daß eine Änderung der Koeffizienten $C_n$ durch folgende Gleichung beschrieben wird:

$$\frac{\delta U_{MPX}(t)}{\delta c_n} = \frac{\{G_2(t - nT)\,[U_{MPX}(t) \cdot G^*(t) - G^{*o}(t)] + G^*(t) \cdot G_2^{\,o}(t - nT)\}}{U_A}$$

und

$$\frac{\delta U_{Ziel}}{\delta c_n} = 0 = U_{Fehler} \cdot \frac{\delta U_{Fehler}}{\delta c_n}$$

wobei

$$U_{Fehler} = TP[U_{MPX} \cdot \sin(2\pi \cdot 38kHz \cdot t)],$$

$U_{MPX}$          das Multiplexsignal,
$G(t)$          das Ausgangssignal des Filters,
$G^o(t)$          die zeitliche Ableitung und
$G^*(t)$          die komplex Konjugierte des Signals $G(t)$ ist.
$G^{*o}(t)$          die zeitliche Ableitung des komplex konjugierten Signals von $G(t)$

$$G_2\,(t-nT) = \frac{\delta\,G(t)}{\delta\,c_n}$$

$$U_A = G(t) \cdot G^*(t)$$

$n = 1,2,...N$          Numerierung der Filterkoeffizienten
$t$          Zeit
$T$          Abtastperiodendauer
$TP$          Tiefpaß

7. Verfahren nach Anspruch 3, dadurch gekennzeichnet, daß die Tiefpaßfilterung (25) mit einer oberen Grenzfrequenz von $\leq 15$ kHz erfolgt.

**Claims**

1.  Method for eliminating interference, in particular caused by multipath reception, in an FM broadcast signal, the received broadcast signal passing through a filter (13) with controllable coefficients ($C_1$-$C_N$), an objective function ($U_{objective}$) being minimized in order to calculate the coefficients ($C_1$-$C_N$), characterized in that the objective function ($U_{objective}$) is aimed at maximum correspondence of the two sidebands of a subcarrier contained in a stereo multiplex signal ($U_{MPX}$) and carrying the stereo difference signal.

2.  Method according to Claim 1, characterized in that the objective function ($U_{objective}$) is derived from the demodulated FM broadcast signal.

3.  Method according to Claim 2, characterized in that the objective function ($U_{objective}$) is calculated by multiplication (24) of the demodulated FM broadcast signal ($U_{MPX}$) by a further signal, obtained from a pilot tone signal by frequency doubling and quadrature (21), and subsequent low-pass filtering (25).

4.  Method according to one of Claims 1 to 3, characterized in that in the event of reception of a stereo broadcast signal with a pilot signal, amplitude and phase of the pilot signal are likewise adapted.

5.  Method according to Claim 4, characterized in that the adaptation in terms of phase and amplitude is carried out with a relatively small step size ($\beta$).

6.  Method according to one of Claims 1 to 5, characterized in that a change in the coefficients $C_n$ is described by the following equation:

$$\frac{\delta U_{MPX}(t)}{\delta c_n} = \frac{\{G_2(t-nT)[U_{MPX}(t) \cdot G^*(t) - G^{*^o}(t)] + G^*(t) \cdot G_2^{\,o}(t-nT)\}}{U_A}$$

and

$$\frac{\delta U_{objective}}{\delta c_n} = 0 = U_{error} \cdot \frac{\delta U_{error}}{\delta c_n}$$

where

$$U_{error} = TP[U_{MPX} \cdot \sin(2\pi \cdot 38kHz \cdot t)],$$

$U_{MPX}$ is the multiplex signal,
$G(t)$ is the output signal of the filter,
$G^o(t)$ is the time derivative,
$G^*(t)$ is the complex conjugate of the signal $G(t)$,
$G^{*o}(t)$ is the time derivative of the complex conjugate signal of $G(t)$,

$$G_2(t-nT) = \frac{\delta G(t)}{\delta C_n}$$

$$U_A = G(t) \cdot G^*(t)$$

$n = 1, 2, \dots N$ is the numbering of the filter coefficients
$t$ is the time
$T$ is the sampling period, and
$TP$ is the low-pass filter.

7.  Method according to Claim 3, characterized in that the low-pass filtering (25) is carried out with an upper cut-off frequency of ≤15 kHz.

## Revendications

1. Procédé de suppression des perturbations notamment provoquées par une réception par chemins multiples d'un signal FM de radiodiffusion, selon lequel
le signal de radiodiffusion reçu est conduit dans un filtre (13) à coefficients commandés ($C_1$-$C_N$), et pour le calcul des coefficients ($C_1$-$C_N$) on minimise une fonction de destination ($U_{dest}$),
caractérisé en ce que
la fonction de destination ($U_{dest}$) est accordée sur une concordance maximale des deux bandes latérales d'une porteuse auxiliaire contenue dans un signal multiplex stéréo ($U_{MPX}$) portant le signal de différence stéréo.

2. Procédé selon la revendication 1,
caractérisé en ce qu'
on déduit la fonction de destination ($U_{dest}$) du signal FM de radiodiffusion, démodulé.

3. Procédé selon la revendication 2,
caractérisé en ce qu'
on calcule la fonction de destination ($U_{dest}$) par multiplication (24) du signal FM radiodiffusé démodulé ($U_{MPX}$) par un autre signal obtenu à partir du signal pilote stéréo, par doublement de fréquence et mise en quadrature (21) puis passage dans un filtre passe-bas (25).

4. Procédé selon l'une des revendications 1 à 3,
caractérisé en ce que
pour la réception d'un signal stéréo radiodiffusé on adapte également avec un signal pilote en amplitude et en phase du signal pilote.

5. Procédé selon la revendication 4,
caractérisé en ce qu'
on effectue l'adaptation en phase et amplitude avec des pas faibles ($\beta$).

6. Procédé selon l'une des revendications 1 à 5,
caractérisé en ce qu'
on décrit une modification des coefficients $C_n$ par l'équation suivante :

$$\frac{\delta U_{MPX}(t)}{\delta c_n} = \frac{\{G_2(t-nT)[U_{MPX}(t) \cdot G^*(t) - G^{*°}(t)] + G^*(t) \cdot G_2^{°}(t-nT)\}}{U_A}$$

et

$$\frac{\delta U_{dest}}{\delta c_n} = 0 = U_{err} \cdot \frac{\delta U_{err}}{\delta c_n}$$

équations dans lesquelles :

$$U_{err} = TP[U_{MPX} \cdot \sin(2\pi \cdot 38kHz.t)]$$

| | |
|---|---|
| $U_{MPX}$ : | signal multiplex |
| $G(t)$ : | signal de sortie du filtre |
| $G^°(t)$ : | dérivée dans le temps |
| $G^*(t)$ : | conjuguée complexe du signal $G(t)$ |
| $G^{*°}(t)$ : | dérivé dans le temps du signal conjugué complexe de $G(t)$ |

$$G_2(t-nT) = \frac{\delta G(t)}{\delta c_n}$$

$$U_A = G(t) \cdot G^*(t)$$

n = 1, 2,...N : numérotation des coefficients du filtre
t :                 temps
T :                 durée de la période de détection
TP :                filtre passe-bas.

7.  Procédé selon la revendication 3,
    caractérisé en ce qu'
    on effectue le filtrage passe-bas (25) avec une fréquence limite supérieure ≤15 kHz.

Fig. 2

Fig. 1

$$\ddot{U} = \sum_{i=1}^{i=I} a_i \cdot e^{j\Phi_i} \cdot e^{j\omega\tau_i}$$

Fig. 3